Europäisches Patentamt

European Patent Office

Office européen des brevets

(19)

(11) **EP 0 561 690 B1**

(12) **FASCICULE DE BREVET EUROPEEN**

(45) Date de publication et mention
de la délivrance du brevet:
**23.04.1997 Bulletin 1997/17**

(51) Int Cl.6: **G01S 13/34**

(21) Numéro de dépôt: **93400668.5**

(22) Date de dépôt: **16.03.1993**

(54) **Procédé et dispositif de détermination du passage à une distance présélectionnée d'un point réflecteur à l'aide du temps de propagation d'une onde continue**

Verfahren und Vorrichtung zur Feststellung des Erreichens eines vorausbestimmten Abstandes eines Punktreflektors mittels der Laufzeit einer kontinuierlichen Welle

Method and apparatus for detecting a point reflector passing a preselected range utilising the propagation time of a continuous wave

(84) Etats contractants désignés:
**DE FR GB IT**

(30) Priorité: **20.03.1992 FR 9203359**

(43) Date de publication de la demande:
**22.09.1993 Bulletin 1993/38**

(73) Titulaire: **THOMSON-CSF**
**75008 Paris (FR)**

(72) Inventeur: **Canal, Yves**
**F-92402 Courbevoie Cédex (FR)**

(74) Mandataire: **Albert, Claude et al**
**THOMSON-CSF-S.C.P.I.,**
**13, Avenue du Président**
**Salvador Allende**
**94117 Arcueil Cédex (FR)**

(56) Documents cités:
**EP-A- 0 028 182**    **FR-A- 1 227 158**
**GB-A- 946 869**    **GB-A- 2 024 557**
**GB-A- 2 249 448**    **US-A- 5 134 411**

## Description

La présente invention se rapporte à un procédé et à un dispositif de détermination du passage à une distance présélectionnée d'un point réflecteur par mesure indirecte du retard de propagation d'une onde continue modulée en phase et/ou en fréquence et réfléchie audit point.

Il est connu, dans un certain nombre de domaines, d'effectuer des mesures précises de distance à un point visé en mesurant le temps de trajet nécessaire à une onde, notamment une onde électromagnétique, pour revenir à un émetteur après réflexion sur le point visé. Pour éviter l'emploi d'émetteurs de grande puissance instantanée, on a développé des systèmes à émission continue dans le temps, de manière à conserver un niveau d'énergie suffisant éclairant le point visé. La réception s'effectue donc simultanément à l'émission et pour retrouver le temps de propagation aller et retour de l'onde, il est prévu de coder en phase et/ou en fréquence l'onde émise et de déterminer le retard entre le code émis et le code reçu. On trouve de tels systèmes par exemple dans les domaines de la radioaltimétrie, des déclencheurs altimétriques, de l'anticollision de véhicules, etc...

On a développé pour ces systèmes différents codes qui tous reposent sur une modulation de la phase et/ou de la fréquence de l'onde émise. Un des codes les plus couramment utilisés est la modulation linéaire de fréquence. Dans ce cas l'extraction de la distance s'effectue en multipliant le signal reçu avec le signal émis et en mesurant la fréquence de battement obtenue. Malheureusement, en raison du fait que l'on ne mesure pas directement un temps mais une fréquence, il est très possible de prévoir au point visé un ensemble de réception de l'onde puis de réémission avec un décalage en fréquence qui vient fausser la mesure, permettant donc le brouillage du système. Il est clair que le même inconvénient peut se retrouver avec d'autres types de codages connus.

Il est connu, par ailleurs, de réaliser des radars continus à modulation de fréquence dans lesquels on améliore le rapport signal-à-bruit en conférant aux signaux émis une modulation auxiliaire caractéristique qui se présente comme une surmodulation périodique.

Un tel dispositif est décrit, par exemple, dans le brevet français FR-A-1 227 158. Celui-ci préconise l'utilisation, dans un radar continu à modulation linéaire de fréquence, d'une modulation auxiliaire sinusoïdale à une fréquence prédéterminée indépendante de la distance. Cette modulation auxiliaire permet de recevoir les signaux d'écho au travers d'un filtre de bande passante très étroite ce qui améliore les possibilités de détection d'un écho au milieu du bruit.

Un autre dispositif du même genre est décrit dans le brevet anglais GB-A-946 869 ; il concerne un radar continu à modulation de fréquence dans lequel, en plus d'une modulation de fréquence sinusoïdale, on applique au signal émis une seconde modulation périodique sinusoïdale. Ce dispositif permet de supprimer des pics secondaires dans le signal reçu.

Mais ces dispositifs connus ne sont pas à l'abri du brouillage.

Un objet de la présente invention est donc de remédier à cet inconvénient en rendant le brouillage très difficile ou inefficace.

Un autre objet de l'invention est un procédé utilisant une surmodulation périodique superposée au codage normal de manière à faire disparaître le signal utile de battement en dehors d'une distance présélectionnée attendue et, le cas échéant, de certaines distances harmoniques.

Selon l'invention, il est donc prévu un procédé de détermination du passage à une distance présélectionnée d'un point réflecteur, tel que défini dans les revendications 1 à 3.

L'invention a également pour objet un dispositif mettant en oeuvre ce procédé, tel que défini dans les revendications 4 à 8. Grâce à l'utilisation de surmodulations, on provoque la création d'un bruit de phase faisant disparaître le signal utile en dehors de la distance attendue, la reconnaissance du code initialement prévu n'étant plus possible qu'à cette seule distance et à certaines distances harmoniques.

L'invention sera mieux comprise et d'autres caractéristiques et avantages apparaîtront à l'aide de la description ci-après et des dessins joints où :

- la figure 1 représente le schéma de principe d'un radioaltimètre classique ;
- la figure 2 est une courbe explicative de l'utilisation d'une modulation linéaire de fréquence ;
- la figure 3 est un diagramme du signal de battement obtenu après filtrage adapté ;
- la figure 4 illustre le principe d'une surmodulation selon l'invention ;
- la figure 5 est un diagramme du signal de battement obtenu pour une distance non attendue ;
- la figure 6 illustre le cas général de l'utilisation de plusieurs surmodulations selon l'invention ;
- la figure 7 est un diagramme des variations d'amplitude du signal filtré pour deux surmodulations différentes ;
- les figures 8A à 8E illustrent les signaux obtenus pour différentes distances avec deux surmodulations ;
- la figure 9 montre le schéma de principe d'une première variante du dispositif selon l'invention ;
- les figures 10A et 10B illustrent les signaux émis dans deux modes de réalisation d'une seconde variante du dispositif selon l'invention ;
- la figure 11 est le schéma du premier mode de réalisation de cette seconde variante ; et

- la figure 12 est le schéma du deuxième mode de réalisation de cette seconde variante.

Comme on l'a déjà indiqué, la présente invention s'applique à tout système effectuant une mesure de la distance à un point visé par une analyse indirecte du temps nécessaire à une onde pour effectuer le trajet aller-retour entre lui et ce point.

Quand on utilise une onde électromagnétique pour cette mesure de distance, l'invention concerne donc notamment tout système dans le domaine de la radioaltimétrie, du déclenchement altimétrique, de l'anticollision de véhicules et tout système disposant d'un pré-filtrage en distance du signal avant son exploitation.

A titre d'exemple, pour clairement expliquer l'invention, on va choisir le cas d'un radioaltimètre à modulation linéaire de fréquence d'une onde électromagnétique continue, sans que cela soit en rien limitatif.

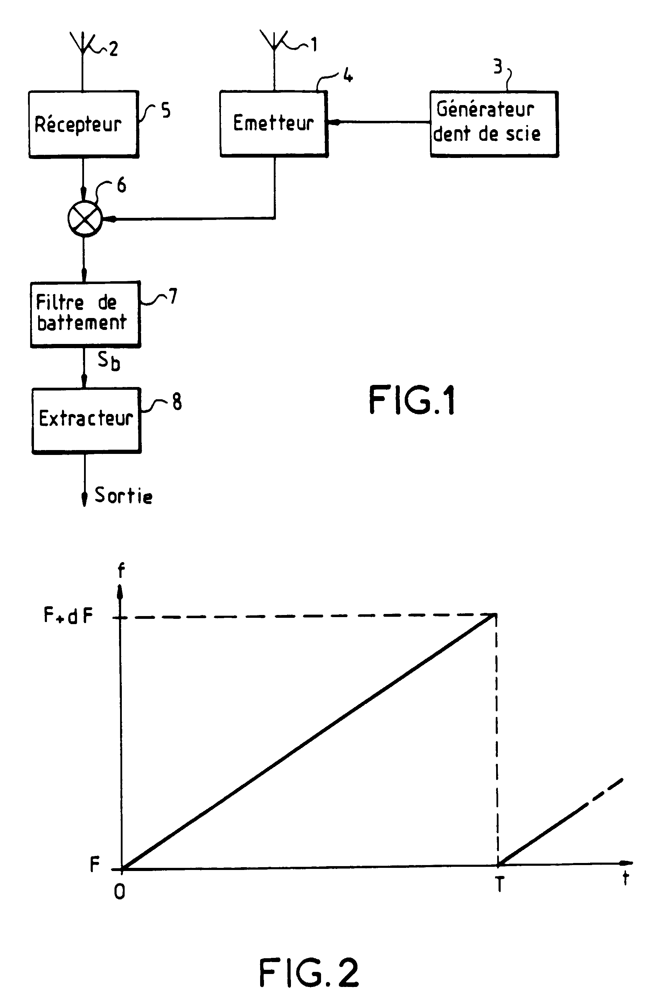

La figure 1 est le schéma d'un tel radioaltimètre connu. Il comprend une partie émission comportant une antenne 1, un émetteur 4, incluant de manière classique un oscillateur commandé en tension, et un générateur de dent de scie 3 fournissant une tension en dent de scie venant commander la fréquence de l'émetteur. La partie réception comporte une antenne 2 suivie d'un récepteur 5 et d'un mélangeur 6 qui multiplie le signal reçu avec le signal émis. Le signal de battement obtenu est envoyé à un filtre 7. Le signal filtré $S_b$ est envoyé à un extracteur 8 fournissant sur sa sortie l'information sur le passage à la distance attendue déterminée par la fréquence centrale du filtre passe-bande 7.

Le fonctionnement est le suivant en se reportant également à la figure 2.

L'émetteur 4 sous la commande du générateur 3 émet une onde de fréquence variant linéairement en fonction du temps (Fig. 2) entre une valeur F à l'instant $\underline{0}$ et une valeur F + dF au bout du temps T qui est la période de la dent de scie. La fréquence émise $F_e$ s'écrit :

$$F_e = F + \frac{dF}{T}t \qquad\qquad (1)$$

Le retard de propagation de l'onde reçue après réflexion au point réflecteur visé situé à une distance D de l'émetteur et du récepteur est égal à $\frac{2D}{c}$ où $\underline{c}$ est la vitesse de propagation de l'onde électromagnétique dans l'espace libre, c'est-à-dire la vitesse de la lumière.

La fréquence $F_r$ de l'onde reçue par le récepteur, en négligeant le décalage Doppler, est :

$$F_r = F + \frac{dF}{T} \left(t - \frac{2D}{c}\right)$$

Le mélangeur 6 fournit un signal de battement à la fréquence $F_b$ (fréquence différence seule conservée par filtrage passe-bas) :

$$F_b = \frac{dF}{T} \frac{2D}{c} \qquad\qquad (2)$$

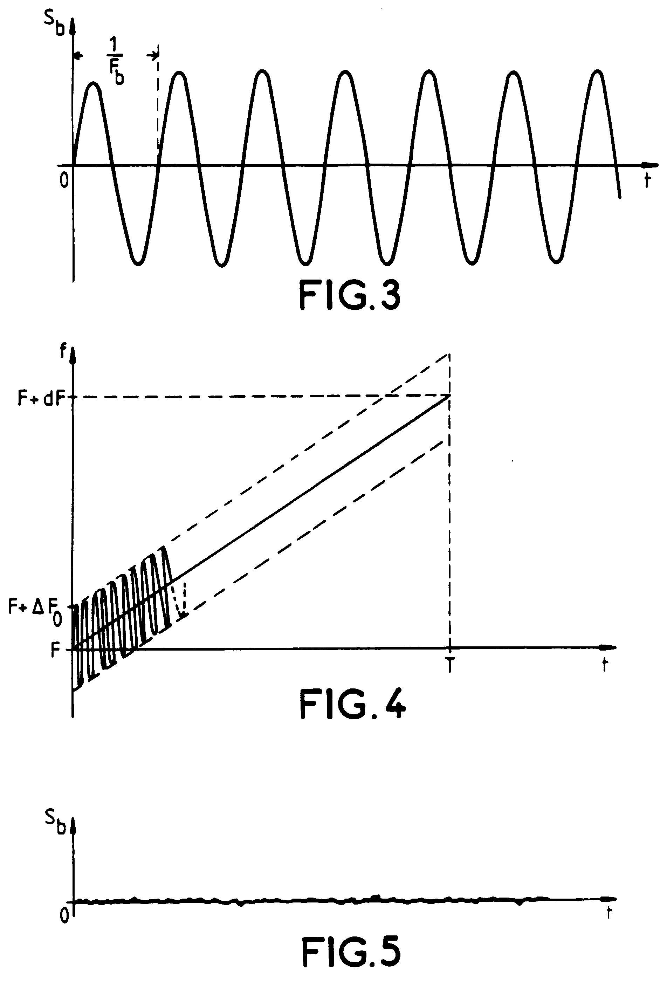

Le signal de battement $S_b$ après filtrage à une fréquence centrale correspondant à la distance D est représenté sur la figure 3.

On peut ainsi déterminer la distance en mesurant la fréquence de battement puisque la pente $\frac{dF}{T}$ et la vitesse $\underline{c}$ sont connues.

Une possibilité souvent utilisée est de déterminer un filtre 7 passe-bande ayant une fréquence centrale fixée, c'est-à-dire que, pour des paramètres dF et T donnés, le filtre est adapté à une distance présélectionnée et ne fournit un signal utile $S_b$ que pour cette distance. On peut alors modifier la distance attendue présélectionnée en modifiant les paramètres de la modulation dF et T sans changer le filtre 7.

Cependant, il est clair que, comme on ne mesure pas directement un retard de propagation mais une fréquence, un tel système mélange deux informations différentes, temps et fréquence, d'où une possibilité de brouillage assez facile. En effet, en disposant au sol un ensemble de réception puis de réémission, après décalage en fréquence $F_d$, de l'onde émise par l'émetteur, la fréquence de battement devient :

$$F_b' = \frac{dF}{T} \frac{2D}{c} + F_d$$

La distance D' obtenue est donc faussée de :

$$D' - D = \frac{T}{dF} \frac{c}{2} F_d$$

L'invention propose d'interdire ce mélange temps-fréquence grâce à l'utilisation d'une surmodulation périodique se superposant à une modulation linéaire pour empêcher la conversion retard-fréquence en dehors du(des) retard(s) de propagation attendu(s).

Dans un premier exemple, on va traiter le cas simple de l'utilisation d'une seule surmodulation sinusoïdale.

On suppose que l'émetteur émet une onde dont la fréquence varie selon la loi :

$$F_e = F + \frac{dF}{T} t + \frac{\pi c}{2\sqrt{2} D_o} \sin (2\pi \frac{c}{2 D_o} t) \qquad (3)$$

où $D_o$ est la distance attendue.

Ceci correspond à la superposition, sur une modulation linéaire de fréquence du type précédent, d'une surmodulation en fréquence sinusoïdale de période $\frac{2 D_o}{c}$ et d'excursion

$$\Delta F_o = \frac{\pi c}{2\sqrt{2} D_o} \, ,$$

comme représenté sur la figure 4.

La phase émise est l'intégrale de cette fréquence (3) en fonction du temps et la phase reçue est égale à la phase émise retardée du retard de propagation. La phase du signal de battement $\varphi_b$ étant la différence entre la phase émise et la phase reçue, le calcul permet de démontrer aisément que :

$$\varphi_b = 2\pi \ \frac{dF}{T} \ \frac{2D}{c} \ t \ + \ C^{ste} \ (D)$$
$$+ \ 2\pi \ \frac{1}{\sqrt{2}} \ \sin \left( \frac{\pi D}{D_o} \right) \ \sin \left( 2\pi \ \frac{ct - D}{2 D_o} \right) \qquad (4)$$

Le premier terme de cette relation fait réapparaître la fréquence de battement de la modulation linéaire classique selon la relation (2). Le dernier terme, par contre, est le produit d'une amplitude fonction de la distance réelle D par une fonction sinusoïdale dépendant du temps. Il résulte du terme dépendant du temps que la phase du signal de battement subit une modulation comprise entre

$$\pm \frac{2\pi}{\sqrt{2}} \sin \left( \frac{\pi D}{D_o} \right)$$

On voit que, si la distance réelle D n'est pas un multiple de la distance attendue présélectionnée $D_o$, l'amplitude de ce bruit de phase n'est pas nulle et que le spectre du signal de battement s'étale fortement s'éloignant de la fréquence de battement attendue.

Au contraire si la distance D est multiple de la distance attendue $D_o$, l'amplitude du bruit de phase est nulle et on retrouve exactement le fonctionnement de la modulation linéaire de fréquence examinée précédemment. Dans le pire des cas où la distance réelle D est égale à $\frac{2n+1}{2}D_o$, la valeur efficace du sinus temporel étant

$$\frac{1}{\sqrt{2}} \, ,$$

la valeur efficace du bruit de phase est $\pi$, faisant totalement disparaître le terme utile $\frac{dF}{T} \frac{2D}{c}$ qui permettrait la mesure de distance.

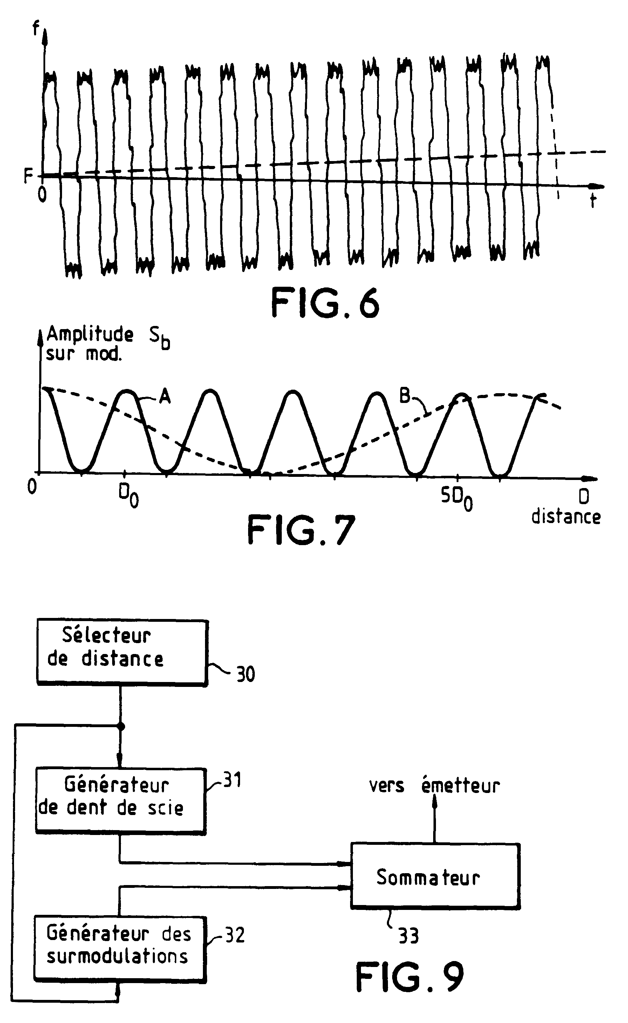

La figure 5 montre le signal obtenu pour une distance réelle égale à 1,5 $D_o$. Ce signal $S_b$ est quasiment nul.

On voit donc qu'il n'est plus possible de brouiller le système simplement en ajoutant un décalage en fréquence à l'onde réfléchie car ce décalage n'a pas d'effet sur la valeur efficace du bruit de phase qui ne dépend que de la distance réelle.

On peut généraliser le procédé ainsi exposé, en se référant aux théories de Fourier, à l'utilisation de toute surmodulation périodique de période égale au retard de propagation attendu $\dfrac{2\,D_o}{c}$. En particulier, l'emploi d'une surmodulation en créneau carré (résultat d'une superposition infinie de fonctions sinusoïdales harmoniques) peut être parfaitement envisagée.

La figure 6 montre la modulation en fréquence obtenue par la somme de trois surmodulations sinusoïdales (échelle dilatée).

Comme on l'a vu, l'utilisation d'une surmodulation périodique, quelle qu'en soit la forme d'onde, ouvre des fenêtres en distance autorisant périodiquement un fonctionnement normal de la modulation linéaire en fréquence. Cette périodicité est égale à la distance attendue $D_o$, c'est-à-dire que le mélange temps-fréquence propre à la modulation linéaire de fréquence redevient possible à toutes les distances multiples de celle attendue.

Pour réduire ou même éviter cet inconvénient, on peut utiliser plusieurs surmodulations associées à des distances attendues différentes, ceci en mettant à profit le fait qu'une surmodulation quelconque autorise toujours un fonctionnement normal de la modulation linéaire de fréquence à distance nulle et avoisinante.

La figure 7 montre les variations d'amplitude du signal utile $S_b$ pour une surmodulation donnée, en fonction de la distance réelle D. La courbe A correspond à une surmodulation associée à une distance attendue présélectionnée $D_o$ et la courbe B à une seconde surmodulation associée à une distance attendue égale à 5,5 $D_o$ dans l'exemple représenté.

Il est clair, à partir de la figure 7, qu'on aura un fonctionnement normal de la modulation linéaire de fréquence seulement aux distances $D_o$, 5 $D_o$, 6 $D_o$, 11 $D_o$, 12 $D_o$, 16 $D_o$, 17 $D_o$, ... Ceci est vrai d'une part à un certain affaiblissement près, variable pour les différentes fenêtres, et fonction de la coincidence ou non des maxima des courbes A et B. D'autre part, il faut noter que, d'une fenêtre à la suivante, il existe une atténuation du signal utile due à l'atténuation de propagation en distance proportionnelle à $D^2$.

Si, dans l'exemple ci-dessus, l'atténuation n'est pas suffisante pour la première distance harmonique attendue 5 $D_o$, on peut utiliser une troisième surmodulation associée par exemple à une distance attendue de 30 $D_o$ qui permet de disposer d'une augmentation d'atténuation de l'ordre de $30^2$, marge qui permet d'avoir un signal utile négligeable dès la première fenêtre en distance après $D_o$.

A titre d'exemple d'application numérique, on a traité dans les figures 8A à 8E le cas de deux surmodulations réglées sur $D_o$ = 150 m et 5,5 $D_o$.

La figure 8A représente le signal filtré $S_b$ pour une distance réelle D = $D_o$ = 150 m : le signal utile est présent et parfaitement détectable à la fréquence du filtre adapté.

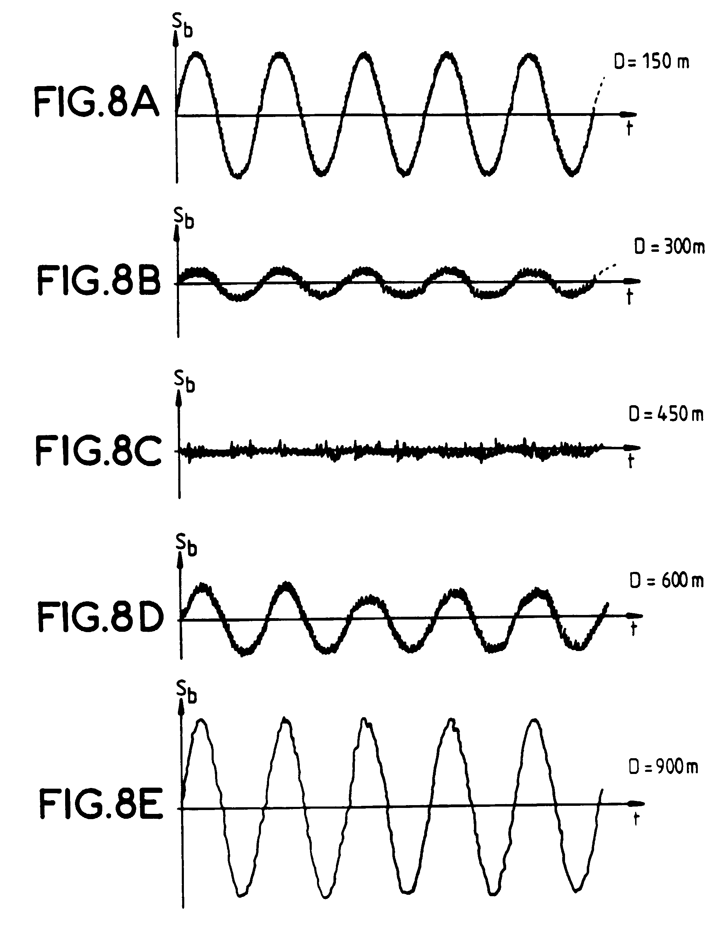

Les figures 8B et 8C représentent le signal filtré pour des distances réelles de 2 $D_o$ et 3 $D_o$. Le signal utile a presque ou complètement disparu.

La figure 8D représente le signal filtré pour une distance réelle égale à 4 $D_o$. On voit que le signal réapparaît mais est encore fortement affaibli. Enfin la figure 8E montre le cas où D = 6 $D_o$, c'est-à-dire le cas où on est dans une fenêtre autorisée. Le signal filtré est bien présent et son amplitude est même légèrement supérieure à celle du signal de la figure 8A, étant entendu que l'on n'a pas du tout tenu compte de l'atténuation en distance.

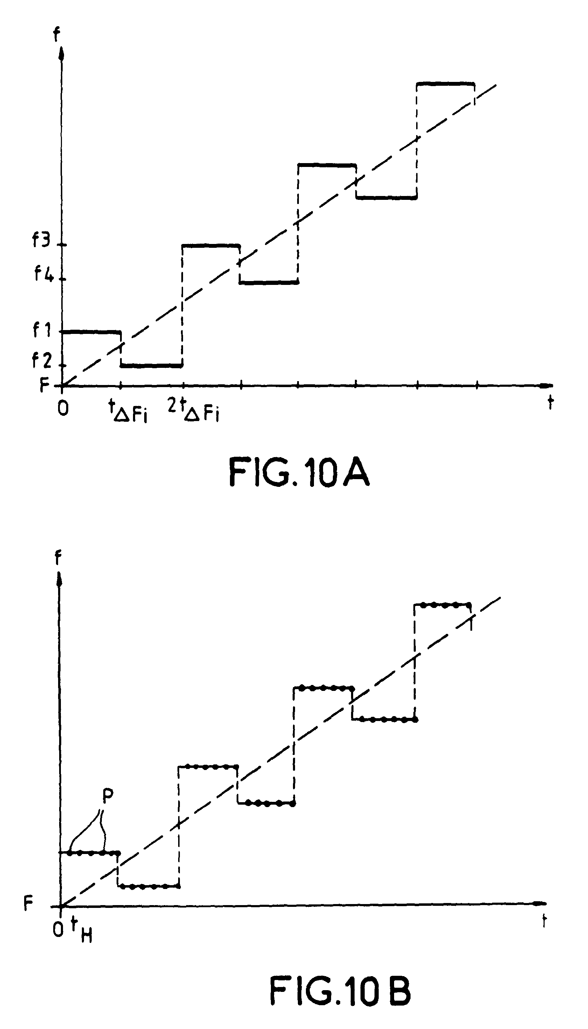

Le procédé selon l'invention ayant été ainsi exposé, la figure 9 représente le schéma de principe d'une première variante de dispositif selon l'invention. Comme on a pu le voir, les seules modifications à apporter au système classique concernent l'émission et plus particulièrement l'élaboration de la tension de commande de l'émetteur fixant la modulation et la surmodulation appliquées à l'onde émise.

Un sélecteur de distance 30 permet de présélectionner une distance attendue $D_o$.

Cette distance attendue est transmise d'une part à un générateur de dent de scie 31 qui fournit la dent de scie avec la pente et la période voulue pour la modulation linéaire de fréquence associée à $D_o$. D'autre part, la distance attendue est envoyée à un générateur de surmodulation 32 qui fournit le signal correspondant aux surmodulations associées à $D_o$ avec la période adéquate. Un circuit sommateur 33 somme les signaux délivrés par les générateurs 31 et 32 et fournit le signal de commande de l'émetteur. Ainsi le circuit de la figure 9 remplace simplement le générateur 3 de la figure 1.

A partir de là, il est possible d'imaginer d'autres variantes de réalisation, notamment sous forme numérique.

La figure 10A représente une courbe montrant le cas d'une surmodulation sinusoïdale superposée à une modulation linéaire de fréquence. La période de la surmodulation est $2t_{\Delta Fi}$ associée à une distance attendue $D_{oi}$. On numérise cette courbe à l'aide de niveaux successifs de quantification, représentés en trait plein, f1, f2, f3, f4 ...

Il est clair que, dans ce cas, lorsque l'on modifie la distance attendue, la période de la surmodulation associée varie et donc aussi la durée $t_{\Delta F_i}$, ce qui implique l'utilisation d'une horloge variable.

Par contre, sur la figure 10B, on a envisagé le cas où on échantillonne le signal de modulation à une fréquence élevée et fixe par rapport aux périodes de surmodulations.

La période d'échantillonnage est $t_H$.

On aurait pu échantillonner directement la surmodulation réelle. En fait on préfère prendre des échantillons P sur des niveaux successifs comme sur la figure 10A, ce qui diminue notablement le nombre de niveaux différents à obtenir. Par ailleurs, l'erreur commise dans la représentation de la modulation au lieu d'être un inconvénient est en fait un avantage car cela équivaut à l'utilisation d'un grand nombre de surmodulations sinusoïdales, ce qui réduit le nombre et éloigne considérablement les fenêtres de fonctionnement normal.

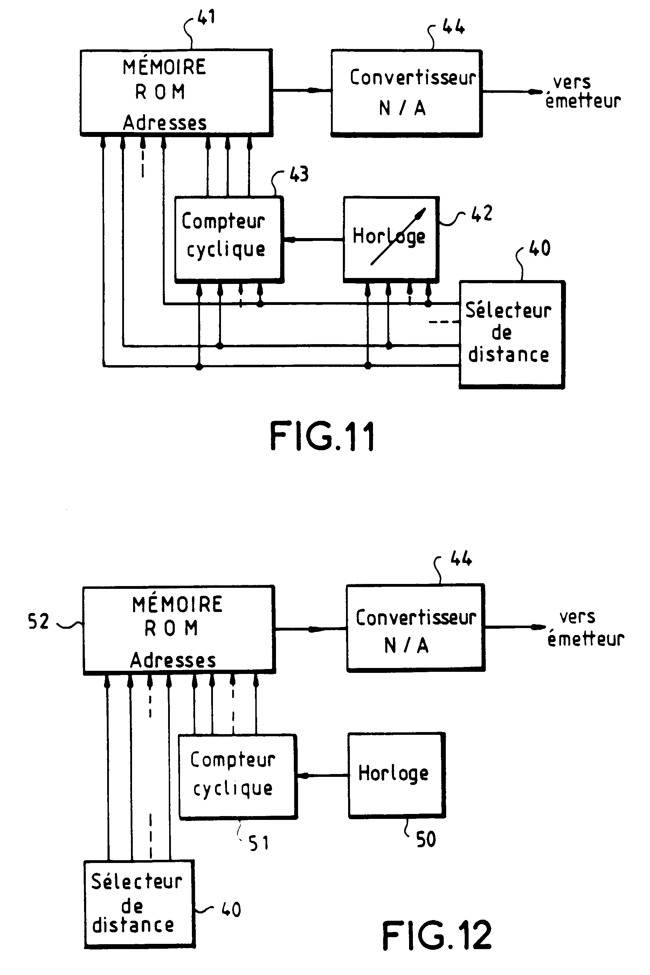

Les figures 11 et 12 montrent des schémas de variantes numériques du dispositif correspondant respectivement aux cas des figures 10A et 10B.

Sur la figure 11, le dispositif générateur du signal de modulation de l'émetteur est construit autour d'une mémoire morte 41 dans laquelle on a stocké les différentes valeurs de niveaux successifs de la surmodulation superposée à la modulation linéaire pour chaque distance attendue. Cette mémoire est adressée d'une part par la distance attendue présélectionnée par un sélecteur de distance numérique 40 et d'autre part par les codes fournis cycliquement par un compteur cyclique programmable 43. Celui-ci fournit les codes successifs permettant de sélectionner à la suite tous les niveaux correspondant à une période de la modulation linéaire de fréquence. Le nombre de codes à fournir dépend de la distance présélectionnée et le compteur est donc programmé par la valeur fournie par le sélecteur de distance 40. Par ailleurs, la fréquence de changement des niveaux de la courbe de la figure 10A dépend, elle aussi, de la distance attendue. Le compteur 43 reçoit les signaux d'horloge d'une horloge 42 à fréquence variable commandée par la valeur fournie par le sélecteur de distance.

Enfin un convertisseur numérique-analogique 44 transforme les valeurs numériques délivrées par la mémoire 41 en un signal analogique de commande de l'émetteur 4 (Fig. 1).

L'avantage d'un tel mode de réalisation est qu'il est très facilement réalisable sous forme intégrée, la capacité de la mémoire 41 restant dans des limites acceptables pour l'intégration.

La figure 12 représente un second mode de réalisation correspondant à l'utilisation d'une horloge à fréquence élevée et constante (cas de la figure 10B). On retrouve une mémoire morte 52 contenant toutes les valeurs d'échantillons pour chaque valeur de distance attendue et le sélecteur de distance 40 adressant cette mémoire. Un compteur cyclique 51 fournit successivement tous les codes d'adresse correspondant aux échantillons successifs d'une période de la modulation linéaire de fréquence. Ce compteur reçoit les signaux d'horloge d'une horloge 50 à fréquence élevée de période $t_H$ (périoded'échantillonnage). De même que dans le mode de réalisation de la figure 11, le convertisseur 44 fournit le signal de modulation de l'émetteur.

Ici, du fait du nombre beaucoup plus élevé d'échantillons à stocker, la mémoire 52 ne peut être intégrée avec les autres éléments. Par contre la réalisation de l'ensemble est plus simple.

Dans la description qui précède, on a décrit le cas d'une modulation de fréquence linéaire comme codage de l'onde émise. Mais l'ensemble de cette description est transposable directement à tout type de codage en fréquence et, par l'intermédiaire du calcul intégral appliqué aux surmodulations, à tout type de codage en phase. D'autre part, la forme d'onde des surmodulations utilisées n'a pas d'importance ; seule compte leur périodicité.

Bien entendu, les exemples de réalisation décrits ne sont donc nullement limitatifs de l'invention.

## Revendications

1. Procédé de détermination du passage à une distance présélectionnée d'un point réflecteur par mesure indirecte du retard de propagation d'une onde continue modulée en phase et/ou en fréquence et réfléchie audit point, dans lequel on émet ladite onde vers ledit point avec un codage caractéristique en phase et/ou en fréquence, on reçoit l'onde réfléchie par ledit point et on effectue une analyse temporelle du retard entre le code émis et le code reçu par filtrage adapté à ladite distance présélectionnée, ledit procédé comportant en outre une étape consistant à superposer, lors de l'émission de ladite onde, au codage caractéristique une surmodulation périodique, caractérisé en ce que la ou lesdites surmodulations périodiques superposées audit codage caractéristique ont une période égale à N fois le retard de propagation de l'onde reçue pour ladite distance prédéterminée, où N est un nombre supérieur ou égal à 1.

2. Procédé selon la revendication 1, dans lequel ledit codage à l'émission consiste en une modulation linéaire de fréquence et ladite analyse temporelle consiste à obtenir un signal de battement entre l'onde reçue et l'onde émise et à appliquer ledit signal de battement à un filtre passe-bande centré sur la fréquence de battement correspondant à ladite distance présélectionnée, caractérisé en ce que ladite étape supplémentaire consiste à superposer à la modulation linéaire de fréquence une surmodulation sinusoïdale de période $\frac{2D_o}{c}$, où $D_o$ est ladite distance présé-

lectionnée et $\underline{c}$ est la vitesse de propagation de l'onde électromagnétique, de façon à n'obtenir à la sortie du filtre un signal utile que pour ladite distance $D_o$ et ses multiples.

3. Procédé selon la revendication 1, dans lequel ledit codage à l'émission consiste en une modulation linéaire de fréquence et ladite analyse temporelle consiste à obtenir un signal de battement entre l'onde reçue et l'onde émise et à appliquer ledit signal de battement à un filtre passe-bande centré sur la fréquence de battement correspondant à ladite distance présélectionnée, caractérisé en ce que ladite étape supplémentaire consiste à superposer à la modulation linéaire de fréquence plusieurs surmodulations sinusoïdales de périodes respectives $\dfrac{2n_i D_o}{c}$, où $D_o$ est ladite distance présélectionnée, c est la vitesse de propagation de l'onde électromagnétique et $n_i$ est un nombre réel positif supérieur ou égal à 1 et différent pour chacune des surmodulations de rang $\underline{i}$.

4. Dispositif de détermination du passage à une distance présélectionnée d'un point réflecteur par mesure indirecte du retard de propagation d'une onde continue modulée en phase et/ou en fréquence et réfléchie audit point, ledit dispositif comportant un émetteur (1, 4) associé à des moyens (3) de modulation dudit émetteur pour émettre ladite onde modulée vers ledit point avec un codage caractéristique en phase et/ou en fréquence et des moyens récepteurs (6, 7, 8) pour recevoir l'onde réfléchie par ledit point et effectuer une analyse temporelle du retard entre le code émis et le code reçu par filtrage (7) adapté à ladite distance présélectionnée, lesdits moyens de modulation comprenant en outre des moyens de surmodulation pour superposer, lors de l'émission de ladite onde, au codage caractéristique une surmodulation périodique, ledit dispositif mettant en oeuvre le procédé selon la revendication 1 et étant caractérisé en ce que lesdits moyens de surmodulation (32, 33; 40 à 44; 40, 44, 50 à 52) sont prévus pour superposer au codage caractéristique au moins une surmodulation périodique de période égale à N fois le retard de propagation de l'onde reçue pour ladite distance prédéterminée, où N est un nombre supérieur ou égal à 1.

5. Dispositif selon la revendication 4, dans lequel lesdits moyens de modulation dudit émetteur comprennent un générateur de dent de scie (31) et un sélecteur de distance (30) fournissant la valeur de ladite distance présélectionnée au générateur de dent de scie, de manière que celui-ci fournisse audit émetteur (4) un signal de modulation linéaire en fréquence adaptée à ladite distance présélectionnée, et dans lequel lesdits moyens récepteurs comprennent des moyens de battement (6) pour obtenir un signal de battement entre l'onde reçue et l'onde émise par ledit émetteur (4) et un filtre passe-bande (7) centré sur une fréquence prédéterminée correspondant à ladite distance présélectionnée, ledit dispositif étant caractérisé en ce que lesdits moyens de surmodulation comprennent :

- un générateur de surmodulations (32) commandé par ladite valeur de la distance présélectionnée fournie par ledit sélecteur de distance (30) pour délivrer un signal de surmodulation en fréquence correspondant à l'utilisation de P surmodulations sinusoïdales de périodes respectives $\dfrac{2n_i D_o}{c}$, où $D_o$ est ladite distance présélectionnée, $\underline{c}$ est la vitesse de propagation de l'onde électromagnétique et $n_i$ est un nombre réel positif sensiblement égal à 1 pour l'une des surmodulations et supérieur à 1 pour les autres surmodulations, $\underline{i}$ étant le rang de la surmodulation et $n_i$ étant différent pour chacune des surmodulations ; et

- des moyens sommateurs (33) recevant ledit signal de modulation linéaire venant du générateur de dent de scie (31) et ledit signal de surmodulation en fréquence venant du générateur de surmodulations (32) et fournissant le signal de modulation commandant l'émetteur (4).

6. Dispositif selon la revendication 4, caractérisé en ce que lesdits moyens de modulation comprennent :

- une mémoire morte (41 ; 52) contenant sous forme numérique les valeurs des échantillons du signal de modulation devant commander ledit émetteur (4) pour chaque codage caractéristique et les surmodulations associées, pour chaque valeur de distance présélectionnable ;
- un sélecteur de distance (40) pour fournir un signal numérique représentatif de ladite distance présélectionnée ;
- des moyens (42, 43 ; 50, 51) d'adressage de ladite mémoire à partir du signal numérique fourni par ledit sélecteur de distance (40) ; et
- un convertisseur numérique-analogique (44) pour convertir les valeurs d'échantillon délivrées successivement par ladite mémoire en un signal de modulation pour commander ledit émetteur.

**EP 0 561 690 B1**

7. Dispositif selon la revendication 6, caractérisé en ce que lesdits moyens d'adressage comprennent :

   - une horloge (50) à fréquence fixe très supérieure à celle de toutes les surmodulations utilisées ; et
   - un compteur cyclique (51) recevant les signaux de ladite horloge et fournissant des signaux numériques qui constituent, avec le signal délivré par le sélecteur de distance (40), les signaux d'adressage de ladite mémoire (52).

8. Dispositif selon la revendication 6, caractérisé en ce que lesdits moyens d'adressage comprennent :

   - une horloge (42) à fréquence variable commandée par le signal délivré par ledit sélecteur de distance (40) ; et
   - un compteur cyclique programmable (43), programmé à l'aide dudit signal délivré par ledit sélecteur de distance (40), ledit compteur recevant les signaux de ladite horloge et fournissant des signaux numériques qui constituent, avec le signal délivré par le sélecteur de distance (40), les signaux d'adressage de ladite mémoire (41).

## Patentansprüche

1. Verfahren zur Bestimmung des Durchgangs eines Reflexionspunkts durch eine vorgewählte Distanz aufgrund der indirekten Messung der Laufzeit einer Dauerstrichwelle, die nach Phase und/oder Frequenz moduliert ist und an dem Punkt reflektiert wird, wobei die Welle in Richtung zu dem Punkt mit einer charakteristischen Phasen- und/oder Frequenzkodierung ausgesendet wird, die von dem Punkt reflektierte Welle empfangen wird und eine zeitliche Analyse der Verzögerung zwischen dem ausgesendeten und dem empfangenen Kode durch eine an die vorgewählte Distanz angepaßte Filterung erfolgt, und wobei das Verfahren außerdem einen Schritt enthält, demgemäß beim Aussenden der Welle der charakteristischen Kodierung eine periodische Übermodulation überlagert wird, dadurch gekennzeichnet, daß die mindestens eine der charakteristischen Kodierung überlagerte periodische Übermodulation eine Periode besitzt, die N mal der Laufzeit der empfangenen Welle für die vorbestimmte Distanz entspricht, wobei N eine Zahl $\geq 1$ ist.

2. Verfahren nach Anspruch 1, bei dem die sendeseitige Kodierung in einer linearen Frequenzmodulation und die zeitliche Analyse darin besteht, ein Überlagerungssignal zwischen der empfangenen und der ausgesendeten Welle zu erhalten und dieses Überlagerungssignal einem Bandpaßfilter zuzuführen, das auf die Überlagerungsfrequenz entsprechend der vorgewählten Distanz zentriert ist, dadurch gekennzeichnet, daß der zusätzliche Schritt darin besteht, der linearen Frequenzmodulation eine sinusförmige Übermodulation einer Periode $2D_0/c$ zu überlagern, wobei $D_0$ die vorgewählte Distanz und c die Ausbreitungsgeschwindigkeit der elektromagnetischen Welle ist, so daß am Ausgang des Filters ein Nutzsignal nur für die Distanz $D_0$ und deren Vielfache erhalten wird.

3. Verfahren nach Anspruch 1, bei dem die sendeseitige Kodierung in einer linearen Frequenzmodulation und die zeitliche Analyse darin besteht, ein Überlagerungssignal zwischen der empfangenen und der ausgesendeten Welle zu erhalten und dieses Überlagerungssignal einem Bandpaßfilter zuzuführen, das auf die Überlagerungsfrequenz entsprechend der vorgewählten Distanz zentriert ist, dadurch gekennzeichnet, daß der zusätzliche Schritt darin besteht, der linearen Frequenzmodulation mehrere sinusförmige Übermodulationen mit den Perioden $2n_iD_0/c$ zu überlagern, wobei $D_0$ die vorgewählte Distanz, c die Ausbreitungsgeschwindigkeit der elektromagnetischen Welle und $n_i$ eine positive reelle Zahl $\geq 1$ ist und für jeden Rang i einen anderen Wert annimmt.

4. Vorrichtung zur Durchführung des Verfahrens nach Anspruch 1 und zur Bestimmung des Durchgangs eines Reflexionspunkts durch eine vorgewählte Distanz aufgrund der indirekten Messung der Laufzeit einer Dauerstrichwelle, die nach Phase und/oder Frequenz moduliert ist und von dem Punkt reflektiert wird, wobei die Vorrichtung einen Sender (1, 4 in Verbindung mit Mitteln (3) zur Modulation des Senders enthält, damit die modulierte Welle mit einer charakteristischen Phasen- und/oder Frequenzkodierung ausgesendet wird, und Empfangsmittel (6, 7, 8) zum Empfang der von dem Punkt reflektierten Welle und zur zeitlichen Analyse der Verzögerung zwischen dem ausgesendeten und dem empfangenen Kode durch eine an die vorgewählte Distanz angepaßte Filterung (7) enthält, wobei die Modulationsmittel weiter Übermodulationsmittel aufweisen, um beim Aussenden der Welle der charakteristischen Kodierung eine periodische Übermodulation zu überlagern, dadurch gekennzeichnet, daß die Übermodulationsmittel (32, 33; 40 bis 44; 40, 44, 50 bis 52) dazu bestimmt sind, der charakteristischen Kodierung mindestens eine periodische Übermodulation einer Periode zu überlagern, die N mal der Laufzeit der empfangenen Welle für die vorbestimmte Distanz gleicht, wobei N eine ganze Zahl $\geq 1$ ist.

**5.** Vorrichtung nach Anspruch 4, in der die Modulationsmittel für den Sender einen Sägezahngenerator (31) und einen Distanzwähler (30) enthalten, wobei letzterer den Wert der vorgewählten Distanz an den Sägezahngenerator liefert, so daß dieser dem Sender (4) ein lineares Frequenzmodulationssignal in Anpassung an die vorgewählte Distanz liefert, und wobei die Empfangsmittel Überlagerungsmittel (6), die ein Überlagerungssignal zwischen der empfangenen und der vom Sender (4) ausgesendeten Welle erzeugen, sowie ein Bandpaßfilter (7) enthalten, das auf eine vorbestimmte Frequenz entsprechend der vorgewählten Distanz zentriert ist, dadurch gekennzeichnet, daß die Übermodulationsmittel aufweisen:

- einen Übermodulationsgenerator (32), der von dem vom Distanzwähler (30) gelieferten vorgewählten Distanzwert gesteuert wird und ein Frequenzübermodulationssignal entsprechend der Verwendung von P sinusförmigen Übermodulationen mit den Perioden $2n_iD_0/c$ liefert, wobei $D_0$ die vorgewählte Distanz, c die Ausbreitungsgeschwindigkeit der elektromagnetischen Welle und $n_i$ eine reelle positive Zahl ist, die für eine der Übermodulationen den Wert 1 und für die anderen einen Wert größer als 1 hat, wobei i der Übermodulationsrang ist und die Werte $n_i$ sich für jede der Übermodulationen voneinander unterscheiden,
- und Summiermittel (33), die das lineare Modulationssignal vom Sägezahngenerator (31) und das Frequenzübermodulationssignal vom Übermodulationsgenerator (32) empfangen und das Modulationssignal zur Steuerung des Senders (4) liefern.

**6.** Vorrichtung nach Anspruch 4, dadurch gekennzeichnet, daß die Modulationsmittel aufweisen:

- einen Festwertspeicher (41; 52), der in digitaler Form die Werte der Modulationssignal-Tastproben zur Steuerung des Senders (4) für jede charakteristische Kodierung sowie die zugeordneten Übermodulationen für jeden vorwählbaren Distanzwert enthält,
- einen Distanzwähler (40), der ein digitales Signal liefert, das für die vorgewählte Distanz repräsentativ ist,
- Adressiermittel (42, 43; 50, 51) für die Adressierung des Speichers ausgehend von dem vom Distanzwähler (40) gelieferten digitalen Signal,
- einen Digital-Analog-Wandler (44), um die nacheinander von dem Speicher gelieferten Tastprobenwerte in ein Modulationssignal zur Steuerung des Senders umzuwandeln.

**7.** Vorrichtung nach Anspruch 6, dadurch gekennzeichnet, daß die Adressiermittel enthalten:

- einen Taktgeber (50) mit einer festen Frequenz, die deutlich über der aller verwendeten Übermodulationen liegt,
- und einen zyklischen Zähler (51), der die Signale des Taktgebers empfängt und digitale Signale liefert, die mit dem vom Distanzwähler (40) gelieferten Signal die Adressiersignale für den Speicher (54) bilden.

**8.** Vorrichtung nach Anspruch 6, dadurch gekennzeichnet, daß die Adressiermittel enthalten:

- einen Taktgeber (42) mit variabler Frequenz, die vom durch den Distanzwähler (40) lieferten Signal gesteuert wird,
- und einen programmierbaren zyklischen Zähler (43), der mit Hilfe des vom Distanzwähler (40) gelieferten Signals programmiert ist und die Signale des Taktgebers empfängt sowie digitale Signale liefert, die zusammen mit dem vom Distanzwähler (40) gelieferten Signal die Adressiersignale für den Speicher (41) bilden.

## Claims

**1.** Method to determine the passing of a reflector point at a pre-selected distance by indirect measurement of the delay of propagation of a phase-modulated and/or frequency-modulated continuous wave reflected at said point, wherein said wave is transmitted towards said point with a characteristic coding in phase and/or in frequency, the wave reflected by said point is received and a temporal analysis is made of the delay between the transmitted code and the received code by means of filtering adjusted to said pre-selected distance, said method further comprising a step consisting in the superimposing, during the transmission of said wave, on the characteristic coding, of a periodic over-modulation has characterized in that the said periodic overmodulation(s) superimposed on the said characteristic coding have a period equal to N times the delay of propagation of the received wave for said pre-selected distance, where N is a number greater than or equal to 1.

**2.** Method according to Claim 1, wherein said coding at transmission consists of a linear modulation of frequency and said temporal analysis consists in obtaining a beat signal between the received wave and the transmitted wave and in applying said beat signal to a bandpass filter centered on the beat frequency corresponding to said pre-selected distance, characterized in that said additional step consists in the superimposing, on the linear modulation of frequency, of a sinusoidal over-modulation with a period $\frac{2D_o}{c}$, where $D_o$ is said pre-selected distance and $\underline{c}$ is the speed of propagation of the electromagnetic wave, so that a useful signal is obtained at output of the filter only for said distance $D_o$ and its multiples.

**3.** Method according to Claim 1, wherein said coding at transmission consists of a linear modulation of frequency and said temporal analysis consists in obtaining a beat signal between the received wave and the transmitted wave and in applying said beat signal to a bandpass filter centered on the beat frequency corresponding to said pre-selected distance, characterized in that said additional step consists in the superimposing, on the linear modulation of frequency, of several sinusoidal over-modulations with respective periods $\frac{2n_i D_o}{c}$, where $D_o$ is said pre-selected distance and $\underline{c}$ is the speed of propagation of the electromagnetic wave and $n_i$ is a positive real number greater than or equal to 1 and different for each of the over-modulations of order $\underline{i}$.

**4.** Device to determine the passing of a reflector point at a pre-selected distance by indirect measurement of the delay of propagation of a phase-modulated and/or frequency-modulated continuous wave reflected at said point, said device comprising a transmitter (1, 4) associated with means (3) for the modulation of said transmitter to transmit said modulated wave towards said point with a characteristic coding in phase and/or in frequency and receiver means (6, 7, 8) to receive the wave reflected by said point and carry out a temporal analysis of the delay between the transmitted code and the received code by filtering (7) adjusted to said pre-selected distance, said modulation means further comprising over-modulation means for the superimposing, at the transmission of said wave, on the characteristic coding, of a periodic over-modulation, said device implementing the method according to Claim 1 and being characterized in that the said over-modulation means (32, 33; 40 to 44; 40, 44, 50 to 52) are designed to superimpose on the characteristic coding at least one periodic over-modulation period equal to N times the delay of propagation of the received wave for said pre-determined distance, where N is a number greater than or equal to 1.

**5.** Device according to Claim 4, wherein said modulation means for said transmitter include a saw-tooth generator (31) and a distance selector (30) supplying the value of said pre-selected distance to the saw-tooth generator, so that said generator supply/ supplies said transmitter (4) a linear frequency modulation signal adjusted to said pre-selected distance, and wherein said receiver means include beat means (6) to obtain a beat signal between the received wave and the wave transmitted by said transmitter (4), and a bandpass filter (7) centered on a pre-determined frequency corresponding to said pre-selected distance, the device being characterized in that the said over-modulation means comprise:

- an over-modulation generator (32) controlled by said value of the pre-selected distance supply/supplies by said distance selector (30) to deliver a frequency over-modulation signal corresponding to the use of P sinusoidal over-modulations having respective periods of $\frac{2n_i D_o}{c}$, where $D_o$ is said pre-selected distance, $\underline{c}$ is the speed of propagation of the electromagnetic wave and $n_i$ is a positive real number that is substantially equal to 1 for one of the over-modulations and greater than 1 for the other over-modulations, $\underline{i}$ being the order of the over-modulation and $n_i$ being different for each of the over-modulations; and
- summator means (33) receiving said linear modulation signal coming from the saw-tooth generator (31) and said frequency over-modulation signal coming from the over-modulation generator (32) and supplying the modulation signal that controls the transmitter (4).

**6.** Device according to Claim 4, characterized in that said modulation means comprise:

- a read-only memory (41; 52) containing, in digital form, the values of the samples of the modulation signal that has to control said transmitter (4) for each characteristic coding and the associated over-modulations, for each pre-selectable distance value;
- a distance selector (40) to supply/supplies a digital signal representing said pre-selected distance;
- means (42, 43; 50, 51) to address said memory on the basis of the digital signal supply/supplies by said distance selector (40); and

- a digital-analog converter (44) to convert the sample values delivered successively by said memory into a modulation signal to control said transmitter.

7. Device according to Claim 6, characterized in that said addressing means comprise:

- a clock (50) with a fixed frequency far higher than that of all the over-modulations used; and
- a cyclical counter (51) receiving the signals from said clock and supplying digital signals which, with the signal delivered by the distance selector (40), constitute the signals for the addressing of said memory (52).

8. Device according to Claim 6, characterized in that said addressing means comprise:

- a clock (42) with variable frequency controlled by the signal delivered by said distance selector (40); and
- a programmable cyclical counter (43), programmed by means of said signal delivered by said distance selector (40), said counter receiving the signals from said clock and supplying digital signals which, with the signal delivered by the distance selector (40), constitute the signals for the addressing of said memory (41).

FIG.1

FIG.2

FIG.3

FIG.4

FIG.5

# FIG. 6

# FIG. 7

Amplitude $S_b$ sur mod.

distance

# FIG. 9

Sélecteur de distance — 30

Générateur de dent de scie — 31

Générateur des surmodulations — 32

Sommateur — 33

vers émetteur

FIG.8A    $S_b$    D = 150 m    t

FIG.8B    $S_b$    D = 300m    t

FIG.8C    $S_b$    D = 450 m    t

FIG.8D    $S_b$    D = 600 m    t

FIG.8E    $S_b$    D = 900m    t

FIG.10 A

FIG.10 B

FIG.11

FIG.12